# EUROPÄISCHE PATENTSCHRIFT

(11) **EP 1 672 288 B1**
(45) Veröffentlichungstag und Bekanntmachung des Hinweises auf die Patenterteilung: **15.06.2011**
(21) Anmeldenummer: 05111054.2
(22) Anmeldetag: 22.11.2005
(51) Int. Cl.: F24H 9/12

(54) **Anlage zum Bereiten von Warmwasser**
Installation for producing hot water
Installation de préparation d'eau chaude

(30) Priorität: 13.12.2004 DE 102004059910
(43) Veröffentlichungstag der Anmeldung: 21.06.2006
(73) Patentinhaber: ROBERT BOSCH GMBH, 70442 Stuttgart (DE)
(72) Erfinder: Kroell, Ulrich, 72654 Neckartenzlingen (DE)

(56) Entgegenhaltungen:
- EP-A- 1 281 918
- DE-A1- 19 754 586
- US-A- 2 105 893
- US-A- 4 964 394

## Beschreibung

Die Erfindung betrifft eine Anlage zum Bereiten von Warmwasser nach dem Oberbegriff des Anspruchs 1.

### Stand der Technik

Eine derartige Anlage ist aus DE 10138388 C2 bekannt, bei der ein Speicherbehälter in einem unteren Bereich mittels einer von Solarkollektoren gespeisten Heizschlange erwärmt wird und in einem oberen Bereich beim Vorliegen einer Wärmeanforderung über eine Ladepumpe und einen Wärmeübertrager eines Heizgerätes nachbeheizt wird. Dabei sind im oberen Speicherbereich des Speicherbehälters mindestens zwei Sensoren zur Erfassung des Wärmeinhalts und der Temperatur übereinander angeordnet. Die Lagepumpe befördert wahlweise Wasser des Speicherbehälters aus dem oberen oder unteren Bereich über den Wärmeübertrager zum Nachheizen des Speicherwassers. Zur wahlweisen Zuschaltung des oberen oder unteren Bereiches des Speicherbehälters ist eine hydraulische Schaltung mit einer Umschalteinrichtung vorgesehen, die den Lagekreis wahlweise an einen Kaltwasseranschluss, der in den unteren Bereich einmündet, oder an einen Warmwasserabzug, der in den oberen Bereich des Speicherbehälters führt, zuschaltet. Durch diese Maßnahme ist es möglich, dass nur ein geringes Speichervolumen des Speicherbehälters auf eine höhere Temperatur als die über die Solaranlage und die Heizschlange eingekoppelte Wärmekapazität gehalten werden muss. Darüber hinaus gewährleistet diese wahlweise Zuschaltung des Ladekreises, dass eine Desinfektion des gesamten Speicherinhalts durchgeführt werden kann, indem der Ladekreis mittels der Umschalteinrichtung über den Kaltwasseranschluss geführt wird.

Aufgabe der vorliegenden Erfindung ist es, eine robuste und kostengünstige Umschalteinrichtung zum wahlweisen Zuschalten des oberen und unteren Bereiches des Speicherbehälters zu schaffen, die ohne Zusatzenergie bzw. ohne eine elektrische Ansteuerung auskommt.

### Vorteile der Erfindung

Die erfindungsgemäße Anlage zum Bereiten von Warmwasser gemäß den kennzeichnenden Merkmalen des Anspruchs 1 hat den Vorteil, dass eine robuste und kostengünstige Umschalteinrichtung vorliegt, die ohne ein elektrisch angesteuertes Ventil auskommt. Mit der Umschalteinrichtung ist es möglich, dass die Wasserzufuhr über die Ladepumpe auf einfache Weise variierbar ist und in die energiesparende Steuerung des Heizgerätes und damit des Speicherbehälters einbezogen wird, wobei mittels der Umschalteinrichtung der Eingang der Ladepumpe zum Nachheizen des Speicherbehälters wahlweise mit dem oberen Bereich oder dem unteren Bereich des Speicherbehälters verbindbar ist. Dabei kann die Nachheizung an die Benutzergewohnheiten angepasst werden. Außerdem erlaubt die mechanische Umschalteinrichtung in gleicher Weise eine thermische Desinfektion des gesamten Speicherinhalts.

Vorteilhafte Weiterbildungen der Erfmdung sind durch die Maßnahmen der Unteransprüche möglich. Eine besonders einfache Ausführungsform der Umschalteinrichtung liegt vor, wenn das Ventilelement als ein in einer Schaltkammer beweglich angeordneter Schwebekörper ausgebildet ist. Eine erste Ausführungsform einer mechanischen Umschalteinrichtung benutzt einen Schwebekörper als Ventilelement, der aufgrund der von der Ladepumpe erzeugten Strömungsgeschwindigkeit zwei Schaltstellungen einnimmt. Ein zweites Ausführungsform einer mechanischen Umschalteinrichtung besteht in einem temperaturabhängigen Schwebekörper als Ventilelement, der den von der Temperatur des Wassers abhängigen Auftrieb ausnutzt. Bei einer dritten Ausführungsform einer mechanischen Umschalteinrichtung liegt ein temperaturabhängiges Schaltelement vor, das mit einem Schwebekörper als Ventilelement zusammenwirkt, wobei das Schaltelement temperaturabhängig den Schwebkörper für zwei Ventilstellungen freigibt. Eine Erleichterung für die Montage und den Service wird dadurch erreicht, wenn der Speicherbehälter eine Öffnung aufweist, durch die die Umschalteinrichtung montierbar und/oder demontierbar ist.

### Ausführungsbeispiele

Ausführungsbeispiel der Erfindung sind in der Zeichnung dargestellt und in der nachfolgenden Beschreibung näher erläutert.

Es zeigen
- Figur 1: eine erfmdungsgemäße Anlage zum Bereiten von Warmwasser im Ladebetrieb,
- Figur 2: eine erfindungsgemäße Anlage zum Bereiten von Warmwasser im Desinfektionsbetrieb,
- Figur 3: eine erste Ausführungsform einer Umschalteinrichtung in einer ersten Schaltstellung,
- Figur 4: die Ausführungsform der Umschalteinrichtung gemäß Figur 3 in einer zweiten Schaltstellung,
- Figur 5: eine zweite Ausführungsform einer Umschalteinrichtung in einer ersten Schaltstellung,
- Figur 6: die Ausführungsform gemäß Figur 5 in einer zweiten Schaltstellung,
- Figur 7: eine dritte Ausführungsform der Umschalteinrichtung in einer ersten Schaltstellung und
- Figur 8: die Ausführungsform gemäß Figur 7 in einer zweiten Schaltstellung.

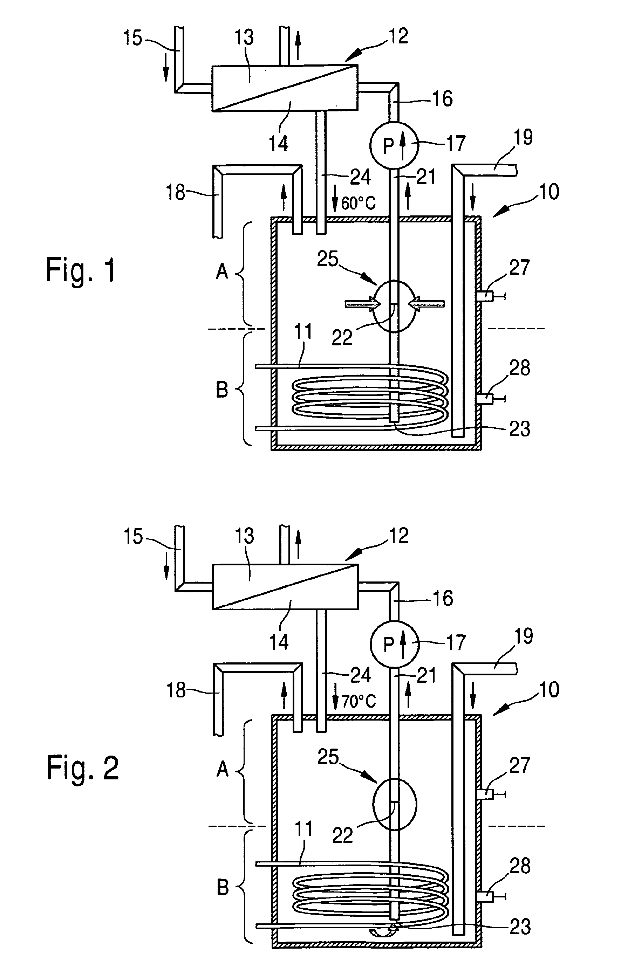

Die Figuren 1 und 2 zeigen eine Anlage zum Bereiten von Warmwasser mit einem Speicherbehälter 10, der als Schichtenspeicher zur Speicherung von Warmwasser dient, mit einer Heizschlange 11, die an eine nicht dargestellten Solaranlage angeschlossen ist, sowie mit einem Wärmeübertrager 12 mit einer Primärseite 13 und einer Sekundärseite 14. Die Primärseite 13 ist an einen Heizkreis 15 eines nicht dargestellten Heizgerätes angeschlossen. Die Sekundärseite 14 bildet einen Ladekreis 16 zum Nachheizen des Wassers des Speicherbehälter 10. In den Ladekreis 16 ist eine Ladepumpe 17 eingeschleift, die zum Umwälzen des Wassers des Speicherbehälter 10 über den Wärmeübertrager 12 dient. Der Speicherbehälter 10 besitzt einen mit A gekennzeichneten oberen Bereich und einen mit B gekennzeichneten unteren Bereich, wobei die Heizschlange 11 der Solaranlage im unteren Bereich B des Speicherbehälters 10 angeordnet ist.

An den Speicherbehälter 10 ist ferner ein Wamwasseranschluss 18 angeschlossen, der in den oberen Bereich A des Speicherbehälters 10 mündet und zu nicht dargestellten Zapfstellen zur Entnahme des warmen Wassers führt. In den unteren Bereich B des Speicherbehälters 10 führt eine an ein Trinkwassernetz angeschlossene Kaltwasserzuleitung 19.

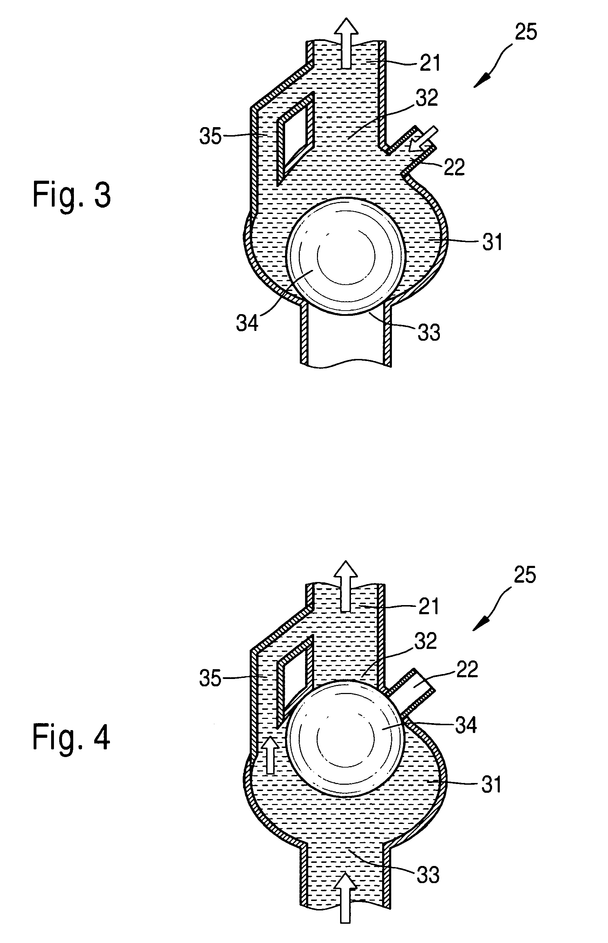

Der Ladekreis 16 verfügt über eine Kaltwasserabzugsleitung 21 mit einer oberen Abzugsöffnung 22 und einer unteren Abzugsöffnung 23 sowie über eine in den oberen Bereich A des Speicherbehälters mündende Warmwasserzulaufleitung 24. Die obere Abzugsöffnung 22 der Kaltwasserabzugsleitung 21 mündet in den oberen Bereich A und die untere Abzugsöffnung 23 der Kaltwasserabzugsleitung 21 in den unteren Bereich B des Speicherbehälters 10. Die Kaltwasserabzugsleitung 21 verfügt ferner über eine Umschalteinrichtung 25, die zweckmäßiger Weise an der Stelle der oberen Abzugsöffnung 23 positioniert ist und die Kaltwasserabzugsleitung 21 wahlweise mit der oberen Abzugsöffnung 22 oder der unteren Abzugsöffnung 23 verbindet. Ausführungsbeispiele zur Ausbildung der Umschalteinrichtung 25 sind in den Figuren 3 bis 8 dargestellt.

In Figur 1 ist ein Ladebetrieb für den Speicherbehälter 10 dargestellt, bei dem die Umschalteinrichtung 25 derart zugeschaltet ist, dass der Ladekreis 16 mittels der Kaltwasserabzugsleitung 21 über die oberen Abzugsöffnung 22 abgekühltes Wasser aus dem oberen Bereich A abzieht und mittels der Ladepumpe 17 über den Wärmeübertrager 12 fördert, dort erwärmt und über den Warmwasserzulauf 24 wieder in den oberen Bereich A des Speicherbehälters 10 einleitet. Dieser Nachheizbetrieb ist ausreichend, wenn von der Solaranlage über die Heizschlange 11 ein genügender Wärmeeintrag erfolgt.

In Figur 2 ist ein sogenannter Desinfektionsbetrieb dargestellt, bei dem die Umschalteinrichtung 25 so geschaltet ist, dass die Kaltwasserabzugsleitung 21 über die untere Abzugsöffnung 23 aus dem unteren Bereich B abgekühltes Wasser des Speicherbehälters 10 entnimmt und mittels der Ladepumpe 17 über den Wärmeübertrager 12, wie beim Ausführungsbeispiel 1 beschrieben, befördert. Zur Ansteuerung der Ladepumpe 17 sind dabei ein erster Temperaturfühler 27 im oberen Bereich A und ein zweiter Temperaturfühler 28 im unteren Bereich B zur Erfassung der jeweiligen Temperatur des Wassers im Speicherbehälter 10 angeordnet.

Aus Figur 3 und 4 geht eine erste Ausführungsform einer Umschalteinrichtung 25 mit einem in einer Schaltkammer 31 beweglich angeordneten Schwebekörper 34 hervor. Die Schaltkammer 31 weist eine an die Kaltwasserabzugsleitung 21 angeschlossene obere Anschlussöffnung 32 und eine untere Anschlussöffnung 33 auf. Der sich in der Schaltkammer 31 befindende Schwebekörper 34 kann wahlweise die obere Anschlussöffnung 32 oder die untere Anschlussöffnung 33, wie später noch beschrieben wird, verschließen. Aus der Schaltkammer 31 führt eine Bypassleitung 35 in die Kaltwasserabzugsleitung 21, so dass die obere Anschlussöffnung 32 hydraulisch überbrückbar ist. An der Schaltkammer 31 ist ferner in der Nähe der oberen Anschlussöffnung 32 die obere Abzugsöffnung 22 angeordnet, wobei die Anordnung der oberen Abzugsöffnung 22 derart ausgeführt ist, dass der Schwebekörper 34 in der oberen Schwebestellung die obere Anschlussöffnung 32 und die obere Abzugsöffnung 22 verschließt. Zur Schaltung zwischen der oberen Abzugsöffnung 22 und der unteren Abzugsöffnung 23 wird die Strömungsgeschwindigkeit in der Kaltwasserabzugsleitung 21 genutzt, wobei diese mittels der Ladepumpe 17 variierbar ist. Bei einer niedrigen Strömungsgeschwindigkeit bleibt der Schwebekörper 34 am Boden der Schaltkammer 31 liegen und verschließt dabei die untere Anschlussöffnung 33, so dass über die unter Abzugsöffnung 23 kein Wasser abgezogen werden kann. Gleichzeitig ist die obere Anschlussöffnung 31 und die obere Abzugsöffnung 22 frei, so dass in dieser Schaltstellung ein Nachheizbetrieb erfolgt, bei dem das Wasser aus dem oberen Bereich A des Speicherbehälters 10 über den Wärmeübertrager 12 befördert wird. Bei Vorliegen einer hohen Strömungsgeschwindigkeit im Ladekreis 16 bzw. einer hohen Förderleistung der Ladepumpe 17 wird der Schwebekörper 34 aus seiner unteren Lage abgehoben und an die obere Anschlussöffnung 32 und die obere Abzugsöffnung 22 gedrückt. Damit sind diese beiden Öffnungen verschlossen und die Kaltwasserabzugsleitung 21 ist über die Bypassleitung 35 mit der unteren Abzugsöffnung 23 verbunden, so dass der Ladekreis 16 aus dem unteren Bereich B abgekühltes Wasser abzieht.

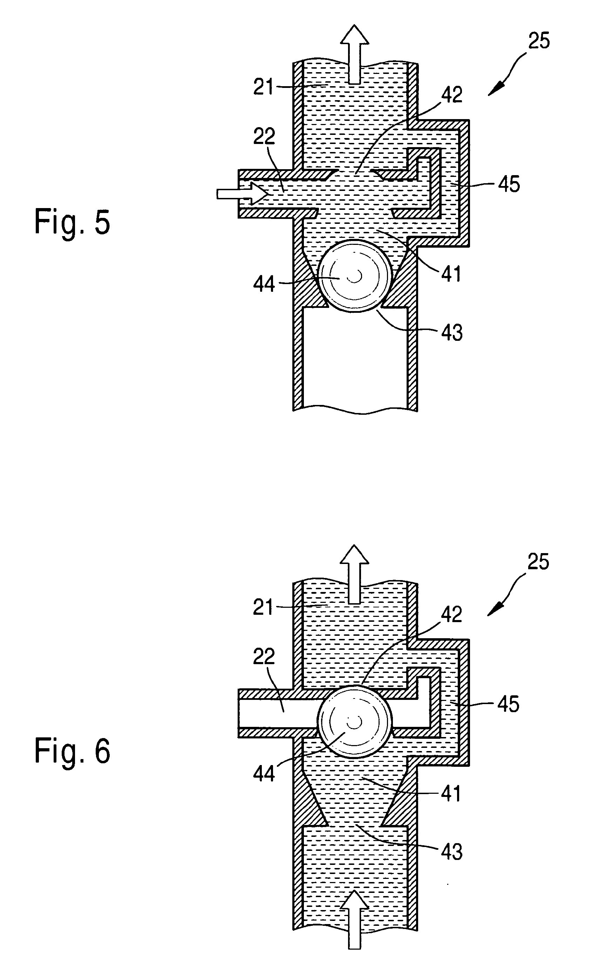

Eine zweite Ausführungsform einer Umschalteinrichtung 25 geht aus den Figuren 5 und 6 hervor. Diese Umschalteinrichtung 25 benutzt einen in einer Schaltkammer 41 beweglich angeordneten, temperaturabhängigen Schwebkörper 44 als Ventilelement, dessen Schwebezustand bzw. Auftrieb temperaturabhängig ist. Die Schaltkammer 41 besitzt eine obere Anschlussöffnung 42, eine untere Anschlussöffnung 43 und eine Bypassleitung 45. In die Schaltkammer 41 mündet ferner die obere Abzugsöffnung 22 und die Kaltwasserabzugsleitung 21. Die Bypassleitung 45 führt aus der Schaltkammer 41 heraus in die Kaltwasserabzugsleitung 21 hinein und überbrückt damit die obere Anschlussöffnung 42. Diese Ausführungsform nutzt den Temperaturunterschied des Wassers des Speicherbehälters 10, wobei im normalen Nachheizbetrieb die Wassertemperaturen im Vorhaltebereich zwischen 40 °C und 60 °C liegen und hierbei der thermische Schwebekörper gemäß Figur 5 die untere Anschlussöffnung 43 verschließt und dabei das Wasser über die obere Abzugsöffnung 22 abgezogen wird. Zur thermischen Desinfektion wird die Temperatur des Wassers des Speicherbehälters auf ca. 70 °C erhöht, wobei dann der thermische Schwebekörper 44 in der Schaltkammer 41 aufsteigt und dabei die obere Anschlussöffnung 42 und die obere Abzugsöffnung 22 verschließt und das Wasser über die untere Abzugsöffnung 23 gemäß Figur 6 abzieht, so dass ungehindert ein Desinfektionsbetrieb mit höheren Wassertemperaturen über den Ladekreis 16 erfolgen kann.

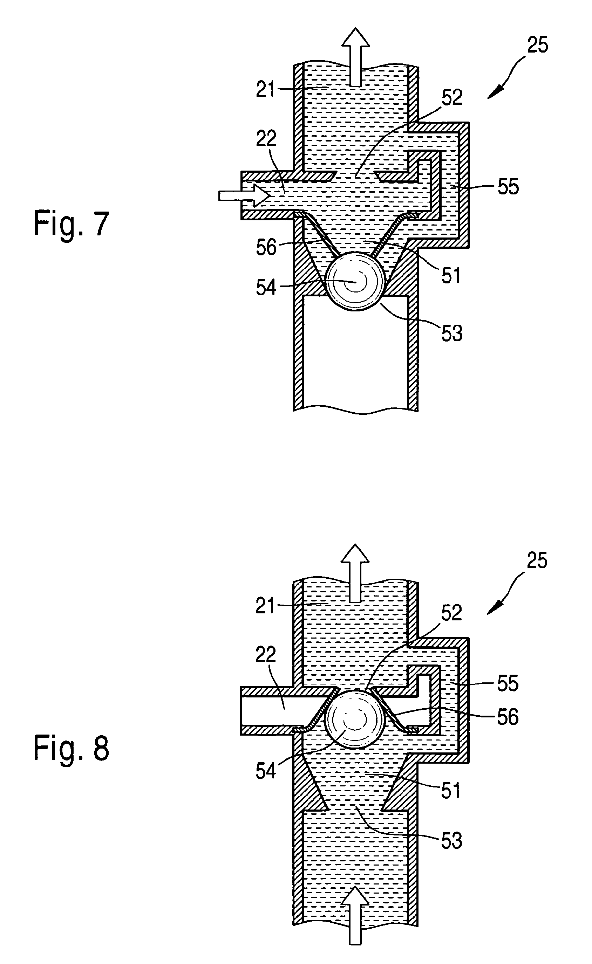

Ein ebenfalls den Temperaturunterschied des Wassers des Speicherbehälters 10 ausnutzende Umschalteinrichtung 25 geht aus den Figuren 7 und 8 hervor. Hierbei weist die Umschalteinrichtung 25 eine Schaltkammer 51, eine obere Anschlussöffnung 52 und eine untere Anschlussöffnung 53 auf. In die Schaltkammer 51 mündet die obere Abzugsöffnung 22. Ferner befindet sich in der Schaltkammer 51 ein Schwebekörper 54 als Ventilelement, auf den ein eintemperaturabhängiges Schaltelement 56, beispielsweise aus Bimetall-Element, einwirkt. Aus der Schaltkammer 51 führt ebenfalls eine die obere Anschlussöffnung 52 überbrückend Bypassleitung 55 in die Kaltwasserabzugsleitung 21 hinein. In der Schaltstellung gemäß Figur 7 ist ein Nachheizbetrieb dargestellt, bei dem das temperaturabhängige Schaltelement 56 den Schwebekörper 54 gegen die untere Anschlussöffnung 53 drückt, so dass die obere Abzugsöffnung 22 freigegeben ist und das Wasser über die obere Abzugsöffnung 22 aus dem oberen Bereich A des Speicherbehälters 10 in die Kaltwasserabzugsleitung 21 einströmen kann. Wird die Temperatur des Wassers im Speicherbehälter 10 beispielsweise bei einer thermischen Desinfektion auf ca. 70 °C erhöht, kippt ab einer vorgegebenen Temperatur das temperaturabhängige Schaltelement 56 gemäß Figur 8 in die entgegengesetzte Schaltstellung und gibt dabei den Schwebkörper 56 frei, wobei diese durch den Sog in der Kaltwasserabzugsleitung 21 gegen die obere Anschlussöffnung 52 gedrückt wird und gleichzeitig die obere Abzugsöffnung 22 verschließt. In dieser Schaltstellung des Schwebekörpers 56 ist die Kaltwasserabzugsleitung 21 mit der unteren Abzugsöffnung 23 verbunden, so dass aus dem unteren Bereich B des Speicherbehälters 10 das Wasser abgezogen und über den Wärmeübertrager 12 befördert wird.

### Bezugszeichenliste

- 10: Speicherbehälter
- 11: Heizschlange
- 12: Wärmeübertrager
- 13: Primärseite
- 14: Sekundärseite
- 15: Heizkreis
- 16: Ladekreis
- 17: Ladepumpe
- 18: Warmwasserauslass
- 19: Kaltwasseranschluss
- 21: Kaltwasserabzugsleitung
- 22: obere Abzugsöffnung
- 23: untere Abzugsöffnung
- 24: Warmwasserzulauf
- 25: Umschalteinrichtung
- 31: Schaltkammer
- 32: obere Anschlussöffnung
- 33: untere Anschlussöffnung
- 34: Schwebekörper
- 35: Bypassleitung
- 41: Schaltkammer
- 42: obere Anschlussöffnung
- 43: untere Anschlussöffnung
- 44: temperaturabhängiger Schwebekörper
- 45: Bypassleitung
- 51: Schaltkammer
- 52: obere Anschlussöffnung
- 53: untere Anschlussöffnung
- 54: Schwebekörper
- 55: Bypassleitung
- 56: temperaturabhängiges Schaltelement

## Patentansprüche

1. Anlage zum Bereiten von Warmwasser mit einem Speicherbehälters (10) und mit einem an einen Ladekreis (16) eines Heizgerätes angeschlossenen Wärmeübertrager (12), wobei in einem Nachheizbetrieb über eine an den Ladekreis (16) angeschlossene Wasserabzugsleitung (21) mittels einer Umschalteinrichtung (25) wahlweise Wasser aus einem oberen Bereich (A) oder einem unteren Bereich (B) des Speicherbehälters (10) über den Wärmeübertrager (12) befördert wird, **dadurch gekennzeichnet, dass** die Wasserabzugsleitung (21) eine obere Abzugsöffnung (22) und eine untere Abzugsöffnung (23) aufweist und dass in der Wasserabzugsleitung (21) die Umschalteinrichtung (25) mit einem mechanischen Ventilelement angeordnet ist, welches wahlweise die obere Abzugsöffnung (22) oder die untere Abzugsöffnung (25) im Nachheizbetrieb freigibt.

2. Anlage nach Anspruch 1, **dadurch gekennzeichnet, dass** das Ventilelement von einem in einer Schaltkammer (31, 41, 51) der Umschalteinrichtung (25) beweglich angeordneten Schwebekörper (34, 44, 54) gebildet ist.

3. Anlage nach Anspruch 2, **dadurch gekennzeichnet, dass** der Schwebekörper (34) derart ausgebildet ist, dass der Schwebekörper (31) in Abhängigkeit von einer im Ladekreis (16) vorliegenden Strömungsgeschwindigkeit in der Schaltkammer (31) eine Position einnimmt, die entweder die obere Abzugsöffnung (22) oder die untere Abzugsöffnung (23) freigibt.

4. Anlage nach Anspruch 2, **dadurch gekennzeichnet, dass** der Schwebekörper (44) derart ausgebildet ist, dass der Schwebekörper (44) in Abhängigkeit der Temperatur des Wassers im Speicherbehälter (10) in der Schaltkammer (41) eine Position einnimmt, die entweder die obere Abzugsöffnung (22) oder die untere Abzugsöffnung (23) freigibt.

5. Anlage nach Anspruch 2, **dadurch gekennzeichnet, dass** die Umschalteinrichtung (25) ein in der Schaltkammer (51) positioniertes, temperaturabhängiges Schaltelement (56) aufweist, das in Abhängigkeit der Temperatur des Wassers im Speicherbehälter (10) auf den Schwebkörper (54) derart einwirkt, das der Schwebkörper (54) in der Schahkammer (51) eine Position einnimmt, die entweder die obere Abzugsöffnung (22) oder die untere Abzugsöffnung (23) freigibt.

6. Anlage nach einem der vorhergehenden Ansprüche, **dadurch gekennzeichnet, dass** der Speicherbehälter (10) in einem unteren Bereich (B) von eine Heizschlange (11) erwärmt wird, die an eine Solaranlage angeschlossen ist.

7. Anlage nach einem der vorhergehenden Ansprüche, **dadurch gekennzeichnet, dass** der Speicherbehälter (10) eine Öffnung aufweist, durch die die Umschalteinrichtung (25) montierbar und/oder demontierbar ist.

## Claims

1. A system for preparing hot water comprising a storage container (10) and comprising a heat exchanger (12) connected to a loading circuit (16) of a heater, wherein in an after-heating mode via a water extraction line (21) connected to the loading circuit (16), water can optionally be conveyed by means of a switching device (25) from an upper region (A) or a lower region (B) of the storage container (10) via the heat exchanger (12), **characterised in that** the water extraction line (21) has an upper extraction opening (22) and a lower extraction opening (23) and that the switching device (25) having a mechanical valve element is disposed in the water extraction line (21), which valve element exposes the upper extraction opening (22) or the lower extraction opening (25) as desired in after-heating mode.

2. The system according to claim 1, **characterised in that** the valve element is formed by a floating body (34, 44, 54) disposed movably in the switching chamber (31, 41, 51) of the switching device (25).

3. The system according to claim 2, **characterised in that** the floating body (34) is configured in such a manner that the floating body (31) adopts a position in the switching chamber (31) depending on a flow velocity present in the loading circuit (16), which either exposes the upper extraction opening (22) or the lower extraction opening (23).

4. The system according to claim 2, **characterised in that** the floating body (44) is configured in such a manner that the floating body (44) adopts a position in the switching chamber (41) depending on the temperature of the water in the storage container (10), which either exposes the upper extraction opening (22) or the lower extraction opening (23).

5. The system according to claim 2, **characterised in that** the switching device (25) comprises a temperature-dependent switching element (56) positioned in the switching chamber (51), which, depending on the temperature of the water in the storage container (10) acts on the floating body (54) in such a manner that the floating body (54) adopts a position in the switching chamber (51) which either exposes the upper extraction opening (22) or the lower extraction opening (23).

6. The system according to any one of the preceding claims, **characterised in that** the storage container (10) is heated in a lower region (B) by a heating coil (11) which is connected to a solar system.

7. The system according to any one of the preceding claims, **characterised in that** the storage container (10) has an opening through which the switching device (25) can be mounted and/or dismounted.

## Revendications

1. Installation pour préparer de l'eau chaude comprenant un réservoir accumulateur (10) et un échangeur de chaleur (12) raccordé à un circuit de charge (16) d'un appareil de chauffage, l'eau provenant au choix d'une zone supérieure (A) ou d'une zone inférieure (B) du réservoir accumulateur (10) étant transportée au moyen de l'échangeur de chaleur (12) dans un mode de chauffage complémentaire par l'intermédiaire d'une conduite de prélèvement d'eau (21) raccordée au circuit de charge (16) au moyen d'un dispositif d'inversion (25), **caractérisée en ce que** la conduite de prélèvement d'eau (21) présente une ouverture de prélèvement (22) supérieure et une ouverture de prélèvement (23) inférieure et **en ce que** le dispositif d'inversion (25) est disposé dans la conduite de prélèvement d'eau (21) avec un élément de vanne mécanique qui libère au choix l'ouverture de prélèvement (22) supérieure ou l'ouverture de prélèvement (25) inférieure dans le mode de chauffage complémentaire.

2. Installation selon la revendication 1, **caractérisée en ce que** l'élément de vanne est formé par un corps flottant (34, 44, 54) disposé de façon mobile dans une chambre de commutation (31, 41, 51) du dispositif d'inversion (25).

3. Installation selon la revendication 2, **caractérisée en ce que** le corps flottant (34) est conçu de telle sorte que le corps flottant (31) occupe, en fonction d'une vitesse d'écoulement présente dans le circuit de charge (16), dans la chambre de commutation (31) une position qui libère soit l'ouverture de prélèvement (22) supérieure soit l'ouverture de prélèvement (23) inférieure.

4. Installation selon la revendication 2, **caractérisée en ce que** le corps flottant (44) est conçu de telle sorte que le corps flottant (44) occupe en fonction de la température de l'eau dans le réservoir accumulateur (10) dans la chambre de commutation (41) une position qui libère soit l'ouverture de prélèvement (22) supérieure soit l'ouverture de prélèvement (23) inférieure.

5. Installation selon la revendication 2, **caractérisée en ce que** le dispositif d'inversion (25) présente un élément de commutation (56) positionné dans la chambre de commutation (51), dépendant de la température, qui agit en fonction de la température de l'eau dans le réservoir accumulateur (10) sur le corps flottant (54) de telle sorte que le corps flottant (54) occupe dans la chambre de commutation (51) une position qui libère soit l'ouverture de prélèvement (22) supérieure soit l'ouverture de prélèvement (23) inférieure.

6. Installation selon l'une quelconque des revendications précédentes, **caractérisée en ce que** le réservoir accumulateur (10) est réchauffé dans une zone (B) inférieure par un serpentin réchauffeur (11) qui est raccordé à une installation solaire.

7. Installation selon l'une quelconque des revendications précédentes, **caractérisée en ce que** le réservoir accumulateur (10) présente une ouverture par laquelle le dispositif d'inversion (25) peut être monté et/ou démonté.
